# EUROPÄISCHE PATENTSCHRIFT

(11) **EP 2 152 448 B1**
(45) Veröffentlichungstag und Bekanntmachung des Hinweises auf die Patenterteilung: **18.08.2010**
(21) Anmeldenummer: 08758111.2
(22) Anmeldetag: 21.05.2008
(51) Int. Cl.: B21D 53/24

(54) **Verfahren zur Herstellung einer Käfigmutter**
Manufacturing method of a cage nut assembly
Méthode de fabrication d'un écrou encagé

(30) Priorität: 06.06.2007 DE 202007007964 U
(43) Veröffentlichungstag der Anmeldung: 17.02.2010
(73) Patentinhaber: Acument GmbH & Co. OHG, 56567 Neuwied (DE)
(72) Erfinder: WEISS, Oliver, 74575 Schrozberg (DE)
(74) Vertreter: Beck, Alexander
(86) Internationale Anmeldenummer: PCT/DE2008/000871
(87) Internationale Veröffentlichungsnummer: WO 2008/148369

(56) Entgegenhaltungen:
- DE-C1- 4 433 470
- GB-A- 530 473
- US-A- 5 193 868
- US-A1- 2003 147 715

## Beschreibung

Die vorliegende Erfindung betrifft ein Verfahren zur Herstellung einer Käfigmutter mit einem zylindrischen Mutternkörper mit einer koaxialen Bohrung mit einem Innengewinde, wobei der Mutternkörper in eine rechteckige Platte ausläuft und der Mutternkörper mittels der rechteckigen Platte in einem Käfig schwimmend gelagert ist.

Solche Käfigmuttern werden in der Industrie in großem Umfang verwendet. Hierzu existieren auch bereits eine Vielzahl verschiedenster Schutzrechte. Nur beispielsweise sei diesbezüglich auf die US 2004/0091333 A1, die US 2004/0013492 A1, die US 2004/0228700 A1 oder die US 2004/0136804 A1 verwiesen. Ein diesbezügliches deutsches Schutzrecht stellt das Gebrauchsmuster 20 2006 003 639.3 dar. Ein Verfahren zur Herstellung einer Käfigmutter ist auch bekannt aus DE 44 33 470 C1.

Alle diese Käfigmuttern gemäß dem Stand der Technik weisen jedoch den Nachteil auf, dass die Herstellung dieser Käfigmuttern sehr aufwendig ist. Zum einen muss ein Mutternkörper mit den entsprechenden Ansätzen, die den Mutternkörper später in dem Käfig halten, hergestellt werden. Sodann muss dieser Mutternkörper mit dem aus Blech gebogenen Käfig umschlossen werden. Durch dieses aufwendige Herstellungsverfahren sind Käfigmuttern bisher sehr teuer und finden dadurch nicht in allen möglichen Anwendungen Verwendung.

Ausgehend von diesem Stand der Technik ist es daher Aufgabe der vorliegenden Erfindung, ein Herstellungsverfahren für eine Käfigmutter zu schaffen, die wesentlich einfacher, schneller und preisgünstiger herzustellen ist.

Erfindungsgemäß wird diese Aufgabe dadurch gelöst, dass die gesamte Käfigmutter einschließlich des Käfigs lediglich durch Tubenformung, Gewindeschneiden, Biegung und Stanzung aus einem einzigen Blechstreifen hergestellt ist. Die erfindungsgemäßen Käfigmuttern können somit aus einem einzigen Blechstreifen in einem einzigen Maschinendurchlauf auf einer Maschine fertig hergestellt werden.

Dabei weist der Blechstreifen, aus dem die Käfigmuttern hergestellt werden sollen, die Form eines langen Bandes auf und in diesem Blechstreifen ist zuerst eine Tube und, in Längsrichtung davon beabstandet, eine kreisförmige Ausstanzung hergestellt.

Der Abstand zwischen dieser Tube und der Ausstanzung in dem Blechstreifen entspricht dabei der Summe aus Höhe und Länge des zu schaffenden Käfigs.

Der Blechstreifen wird dabei in Abschnitte gestanzt oder geschnitten, die jeweils eine Länge von etwa 2 Mal der Höhe plus 3 Mal der Länge des zu schaffenden Käfigs aufweisen, wobei sich die Ausstanzung in der Mitte des Abschnittes befindet.

Dabei wird jeder der Abschnitte auf beiden Seiten der Ausstanzung senkrecht nach oben gebogen, sodass ein Teil des Abschnittes, der die Tube umfasst sowie ein weiterer Teil des Abschnittes senkrecht nach oben gebogen wird.

Weiter wird der Teil des Abschnittes, der die Tube umfasst, nochmals in gleichem Sinne um 90° abgebogen, sodass die Tube konzentrisch in die Ausstanzung ragt.

Bevorzugt ist es dabei, wenn der Teil des Abschnittes mit der Tube abgeschnitten oder ausgestanzt wird, sodass sich die Tube innerhalb der Ausstanzung befindet und diese durchdringt und von dem abgeschnittenen oder ausgestanzten Stück des Teils die rechteckige Platte gebildet wird, durch, die die Mutter schwimmend in dem Käfig gelagert wird und der Käfig durch ein weiteres Umbiegen des weiteren Teils des Abschnittes geschlossen wird.

Eine weitere Vereinfachung der Herstellung der erfindungsgemäßen Käfigmutter ergibt sich, wenn das Innengewinde des Mutternkörpers bereits bei der Formung der Tube in der Tube ausgebildet wird.

Die vorliegende Erfindung wird im Folgenden anhand des in der beigefügten Zeichnung dargestellten Ausführungsbeispieles näher erläutert. Es zeigt:
**Figur 1** den Verlauf sämtlicher Herstellungsschritte einer erfindungsgemäßen Käfigmutter mit der erfindungsgemäßen Käfigmutter als Abschluss in der Übersicht von der Seite in Schnittdarstellung entlang der Mittelachse;
**Figur 2** den Blechstreifen der Figur 1 von oben bis zum Zerstanzen oder Zerschneiden des Blechstreifens;
**Figur 3** eine Detaildarstellung der Figur 1 bezüglich der ersten Schritte der Herstellung der erfindungsgemäßen Käfigmutter bis zum Vereinzeln und ersten Biegen der Abschnitte;
**Figur 4** den Blechstreifen der Figur 3 von oben (entspricht Detail der Figur 2);
**Figur 5** eine vergrößerte Detaildarstellung der abschließenden Fertigungsschritte für die erfindungsgemäße Käfigmutter in Schnittdarstellung (weiteres Detail der Figur 1); und
**Figur 6** die erfindungsgemäße Käfigmutter im fertigen Zustand von der Seite in Schnittdarstellung.

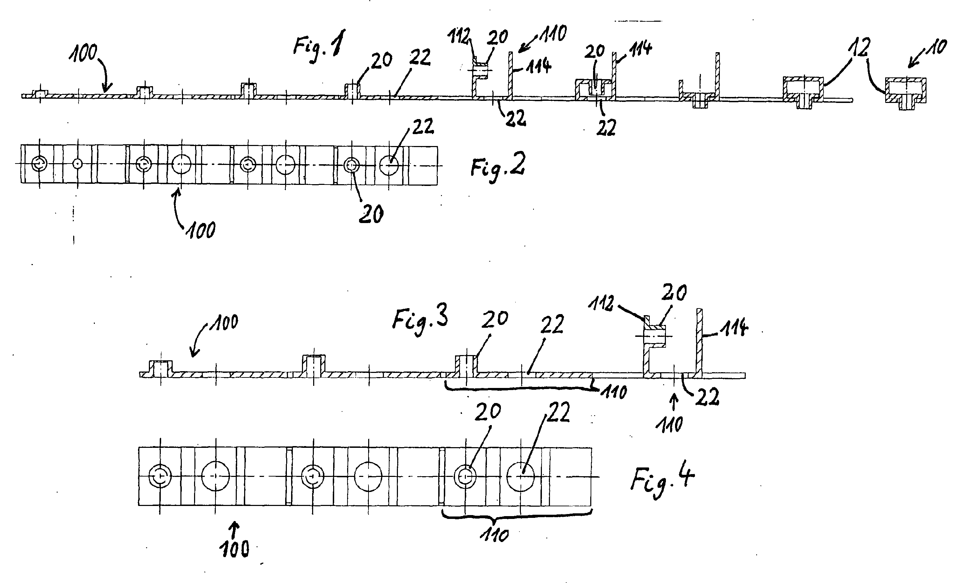

Wie in der Übersicht in Figur 1 dargestellt, wird eine erfindungsgemäße Käfigmutter 10 aus einem einzigen Blechstreifen 100 in einem einzigen Arbeitsdurchlauf auf einer einzigen Maschine hergestellt.

Dabei zeigen die vier ersten Arbeitsschritte von links das Aufweiten der Tube 20 in diesen vier Schritten, wobei im letzten Schritt bereits ein Innengewinde in der Tube angebracht werden kann und gleichzeitig das Ausstanzen einer kreisförmigen Ausstanzung 22. Der Abstand zwischen der Tube 20 und der kreisförmigen Ausstanzung 22 in Längsrichtung des Blechstreifens 100 entspricht dabei der Summe aus Höhe und Erstreckung in Längsrichtung das künftigen Käfigs 12 der Mutter 10.

Sobald der Blechstreifen 100 soweit bearbeitet ist, wird er durch Stanzen oder Schneiden in einzelne Abschnitte 110 aufgeteilt. Wie in Figur 1 und Figur 3 dann weiter dargestellt, weisen diese Abschnitte 110 eine Länge von etwa 2 Mal der Höhe plus 3 Mal der Längserstreckung des künftigen Käfigs 12 auf. Die Ausstanzung 22 befindet sich dabei in der Mitte eines jeweiligen Abschnittes 110.

Wie in Figur 1 und 3 dargestellt, wird nunmehr der Abschnitt 110 auf beiden Seiten der Ausstanzung 22 senkrecht nach oben gebogen, sodass ein Teil 112 des Abschnittes 110, der die Tube 20 umfasst, senkrecht nach oben gebogen ist. Gleichzeitig wird auch der bezüglich der Ausstanzung 22 gegenüberliegende Teil 114 des Abschnittes 110 in gleicher Weise senkrecht nach oben umgebogen.

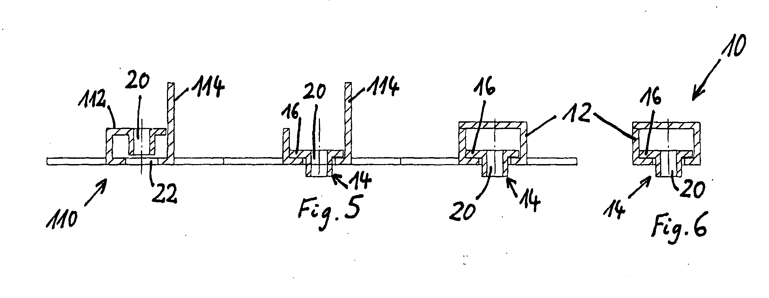

Der nächste Fertigungsschritt ist sodann in den Figuren 1 und 5 dargestellt, in diesem Fertigungsschritt wird der die Tube 20 tragende Teil 112 des Abschnittes 110 nochmals in der gleichen Richtung um 90° senkrecht abgebogen, sodass die Tube 20 nunmehr konzentrisch zu der kreisförmigen Ausstanzung 22 zu liegen kommt und auf diese hin zeigt.

Bei dem nächsten Bearbeitungsschritt, der in Figur 1 und als zweites von links in Figur 5 dargestellt ist, wird nun der zweimal umgefaltete Teil 112 durch eine Stanzung entlang der oberen Faltkante abgetrennt und nach unten geschoben, sodass die Tube 20 nun die Öffnung 22 durchdringt und die Tube 20 zusammen mit einem Stück des Teils 112 den Mutternkörper 14 bildet, der aus der Tube 20, die den zylindrischen gewindetragenden Teil des Mutternkörpers 14 bildet und aus dem Stück des Teils 112 besteht, welches nunmehr die rechteckige Platte 16 bildet, die den Mutternkörper 14 künftig in seinem Käfig schwimmend lagert. In einem letzten Verarbeitungsschritt wird nun der noch verbliebene nach oben gebogene Teil 114 des Abschnittes 110 nochmals in gleichem Sinne um 90° gefaltet, sodass der bisher obere Rand des Teils 114 auf die Kante des bisherigen Teils 112 zu liegen kommt, die durch das Abstanzen des Mutternkörpers 14 entstanden ist. Auf diese Weise ist der Käfig 12 der Mutter 10 geschlossen und der Mutternkörper 14 ist gleichzeitig schwimmend in diesem Käfig 12 aufgenommen.

Figur 6 zeigt diesen Endzustand der erfindungsgemäßen Käfigmutter.

Sofern dies noch nicht im Zuge der Formung der Tube 20 geschehen ist, kann auch jetzt noch das entsprechende Innengewinde in die Tube 20 geformt oder geschnitten werden.

Sofern gewünscht ist, dass eine in die Käfigmutter 10 einzuschraubende Schraube auch auf der dem Mutternkörper 14 gegenüberliegenden Seite des Käfigs 12 aus diesem austreten können soll, kann eine weitere kreisförmige Ausstanzung (hier nicht dargestellt) auf der anderen Seite der Ausstanzung 22 gegenüber der Tube 20 vorgesehen sein. Während der entsprechenden Tubenformung und der zugehörigen Stanzprozesse können auch entsprechende Schwächungslinien in den Blechstreifen 100 eingestanzt werden, die später das entsprechende Umknicken der Teile 112 und 114 des Abschnittes 110 erleichtern.

Erfindungsgemäß wird eine Käfigmutter geschaffen, die komplett aus einem Blechstreifen gefertigt ist, wobei die Fertigung darüber hinaus auch noch in einem Prozessdurchlauf, auf einem Stanz- und Biegeautomaten erfolgen kann. Eine erfindungsgemäß hergestellte Käfigmutter wird also erheblich preisgünstiger in der Herstellung sein als die im Stand der Technik bekannten Käfigmuttern.

## Patentansprüche

1. Verfahren zur Herstellung einer Käfigmutter (10), die aus einem zylindrischen Mutternkörper (14) mit einer koaxialen Bohrung mit einem Innengewinde sowie einem Käfig (12) wobei der Mutternkörper (14) besteht, in eine rechteckige Platte (16) ausläuft und mittels der rechteckigen Platte (16) in dem Käfig (12) schwimmend gelagert wird, wobei die gesamte Käfigmutter (10), also Mutternkörper (14) und Käfig (12), mittels der Verfahrensschritte Tubenformung, Gewindeschneiden, Biegen und Stanzen aus einem einzigen Blechstreifen (100) hergestellt wird und in dem Blechstreifen (100), der die Form eines langen Bandes aufweist, eine Tube (20) gezogen und, in Längsrichtung davon beabstandet, eine kreisförmige Ausstanzung (22) ausgestanzt wird und der Abstand zwischen der Achse der Tube (20) und der Ausstanzung (22) in dem Blechstreifen entsprechend der Summe aus Höhe und Länge des Käfigs (12) gewählt wird und der Blechstreifen (100) in Abschnitte (110), die jeweils eine Tube (20) und eine Ausstanzung (22) aufweisen, gestanzt oder geschnitten wird, die jeweils eine Länge von etwa zweimal der Höhe plus dreimal der Länge des Käfigs (12) aufweisen, **dadurch gekennzeichnet, dass** sich die Ausstanzung (22) in der Mitte des Abschnitts (110) befindet und jeder der Abschnitte (110) auf beiden Seiten der Ausstanzung (22) senkrecht nach oben gebogen wird, so dass ein Teil (112) des Abschnittes (110), der die Tube (20) umfasst, sowie ein weiterer Teil (114) des Abschnittes (110) senkrecht nach oben steht, und der Teil (112) des Abschnittes (110), der die Tube (20) umfasst, nochmals im gleichen Sinne um 90° gebogen wird, so dass die Tube (20) konzentrisch in die Ausstanzung (22) ragt.

2. Verfahren nach Anspruch 1, **dadurch gekennzeichnet, dass** der Teil (112) des Abschnittes (110) mit der Tube (20) abgeschnitten oder ausgestanzt wird, so dass sich die Tube (20) innerhalb der Ausstanzung (22) befindet und diese durchdringt und von dem abgeschnittenen oder ausgestanzten Stück des Teils (112) die rechteckige Platte (16) gebildet wird, durch die die Mutter (14) schwimmend in dem Käfig (12) gelagert wird und der Käfig (12) schließlich durch ein weiteres Umbiegen des weiteren Teiles (114) des Abschnittes (110) geschlossen wird.

3. Verfahren nach Anspruch 1 oder 2, **dadurch gekennzeichnet, dass** bereits bei der Formung der Tube (20) in der Tube (20) ein geeignetes Innengewinde angebracht wird.

## Claims

1. A method for the production of a cage nut (10), which is consisting of a cylindrical nut body (14) having a coaxial bore containing an interior thread as well as of a cage (12), wherein the nut body (14) is ending in an rectangular plate (16) and is floatingly supported by means of the rectangular plate (16) in the cage (12), wherein the entire cage nut, i.e. nut body (14) and cage (12), by means of the method steps tube-forming, thread-cutting, bending, and punching is produced from a singular metal sheet strip (100) and, wherein in the metal sheet strip (100), having the shape of a long strip, a tube (20) is drawn and in a distance in the longitudinal direction there-from a circular punch-out (22) is punched out and, wherein the distance between the axis of the tube (20) and the punch-out (22) in the metal sheet strip is chosen corresponding to the sum of height and length of the cage (12) and, wherein the metal sheet strip (100) is punched or cut into sections (110) which each are containing one tube (20) and one punch-out (22), which each are having a length of about two times the height plus three times the length of the cage (12), **characterized in that** the punch-out (22) is positioned in the centre of the section (110) and, that each of the sections (110) on the both sides of the punch-out (22) is bent upwardly perpendicularly such that a part (112) of the section (110), which is including the tube (20), as well as a further part (114) of the section (110) are projecting upwardly in a perpendicular direction and, that the part (112) of the section (110), which is including the tube (20), again is bent in the same sense by 90° such that the tube (20) is concentrically projecting into the punch-out (22).

2. A method according to claim 1, **characterized in that** the part (112) of the section (110), which is including the tube (20), is cut-off or punched-off such that the tube (20) is positioned within the cut-out (22) and is projecting through the same and, that from the cut-off or punched-off piece of the part (112) the rectangular plate (16) is formed by the means of which the nut (14) floatingly is supported in the cage (12) and, that the cage (12) finally is closed by a further bending of the further part (114) of the section (110).

3. A method according to claim 1 or 2, **characterized in that** already during the forming of the tube (20) within the tube (20) a suitable interior thread is provided.

## Revendications

1. Procédé de fabrication d'un écrou à cage (10) composé d'un corps d'écrou (14) cylindrique avec un perçage coaxial comprenant un filetage intérieur ainsi que d'une cage (12), sachant que le corps d'écrou (14) sort dans un plateau carré (16) et est placé de manière flottante dans la cage (12) au moyen du plateau carré (16), sachant que l'écrou à cage (10) dans sa totalité, c'est-à-dire le corps d'écrou (14) et la cage (12), est fabriqué au moyen des étapes de procédé de façonnage de tube, découpe de filetage, cintrage et estampage dans une bande de tôle (100) unique, et dans la bande de tôle (100) qui présente la forme d'une longue bande, un tube (20) est étiré, et, à distance de celui-ci dans le sens longitudinal, un poinçonnage circulaire (22) est poinçonné et l'écartement entre l'axe du tube (20) et le poinçonnage (22) dans la bande de tôle est choisi en correspondance avec la somme de la hauteur et de la longueur de la cage (12), et la bande de tôle (100) est estampée ou découpée en tronçons (110) présentant chacun un tube (20) et un poinçonnage (22), lesquels présentent respectivement une longueur d'environ deux fois la hauteur plus trois fois la longueur de la cage (12), **caractérisé en ce que** le poinçonnage (22) se trouve au centre du tronçon (110) et que chacun des tronçons (110) est cintré verticalement vers le haut sur les deux côtés du poinçonnage (22), de façon à ce qu'une partie (112) du tronçon (110) qui comprend le tube (20) ainsi qu'une autre partie (114) du tronçon (110) soient placées verticalement vers le haut et que la partie (112) du tronçon (110) qui comprend le tube (20) soit cintrée à nouveau dans le même esprit de 90°, de façon à ce que le tube (20) pénètre de manière concentrique dans le poinçonnage (22).

2. Procédé selon la revendication 1, **caractérisé en ce que** la partie (112) du tronçon (110) est découpée ou estampée avec le tube (20) de manière à ce que le tube (20) se trouve à l'intérieur du poinçonnage (22) et pénètre celui-ci et que le plateau carré (16) soit formé par la pièce découpée ou estampée de la partie (112), à travers lequel l'écrou (14) est placé de manière flottante dans la cage (12), et que la cage (12) est enfin fermée par un cintrage supplémentaire de l'autre partie (114) du tronçon (110).

3. Procédé selon la revendication 1 ou 2, **caractérisé en ce que** dès le façonnage du tube (20), un filetage intérieur approprié est intégré dans le tube (20).
